# EUROPÄISCHE PATENTSCHRIFT

(11) **EP 1 127 245 B1**
(45) Veröffentlichungstag und Bekanntmachung des Hinweises auf die Patenterteilung: **28.07.2004**
(21) Anmeldenummer: 99971502.2
(22) Anmeldetag: 03.11.1999
(51) Int. Cl.: G01B 11/24

(54) **VORRICHTUNG ZUR BESTIMMUNG DER RÄUMLICHEN KOORDINATEN VON GEGENSTÄNDEN**
DEVICE FOR DETERMINING THE SPATIAL CO-ORDINATES OF OBJECTS
DISPOSITIF POUR DETERMINER LES COORDONNEES SPATIALES D'OBJETS

(30) Priorität: 04.11.1998 DE 19852149
(43) Veröffentlichungstag der Anmeldung: 29.08.2001
(73) Patentinhaber: Fraunhofer-Gesellschaft zur Förderung der angewandten Forschung e.V., 80686 München (DE)
(72) Erfinder: SCHREIBER, Wolfgang, D-07747 Jena (DE); NOTNI, Gunther, D-07749 Jena (DE)
(74) Vertreter: Pfenning, Meinig & Partner
(86) Internationale Anmeldenummer: PCT/EP1999/008272
(87) Internationale Veröffentlichungsnummer: WO 2000/026615

(56) Entgegenhaltungen:
- EP-A- 0 403 908
- DE-A- 19 637 682
- FR-A- 2 615 343
- US-A- 4 185 918
- US-A- 4 269 513

## Beschreibung

Die Erfindung betrifft eine Vorrichtung zur Bestimmung der räumlichen Koordinaten von Gegenständen nach dem Oberbegriff des Hauptanspruchs.

Es sind eine Vielzahl von Verfahren und Anordnungen bekannt, die durch Projektion von Gitterlinien, Gray-Code-Sequenzen oder auch einer Kombination von Gitterlinien und Code-Sequenzen Daten für die Berechnung von Oberflächenformen, Oberflächengeometrien oder auch Koordinaten von ausgewählten Objektpunkten gewinnen.

In derartigen Vorrichtungen werden die Gitterlinien oder Gray-Code-Sequenzen auf die zu vermessende Gegenstandsoberfläche projiziert. Eine CCD-Kamera registriert an jedem ihrer Empfängerelemente die Intensität der Bildpunkte von der Objektoberfläche. Mit bekannten mathematischen Algorithmen werden daraus Phasenmeßwerte berechnet. Schließlich werden aus diesen Phasenmeßwerten und den Bildkoordinaten der Meßpunkte in der Bildebene des Aufnahmesystems sowie unter Verwendung von Systemparametern (Orientierungsparametern), die die geometrischen und die Abbildungsbedingungen im Sensor beschreiben, die Koordinaten der Meßpunkte errechnet. Beispielsweise ist aus der DE 44 16 108 eine Vorrichtung bekannt, bei der Gitterlinien aus unterschiedlichen Richtungen auf die zu vermessende Objektoberfläche projiziert werden. Die Koordinaten werden aus Phasenmeßwerten unter Verwendung der Systemparameter bestimmt, wobei letztere separat vor dem eigentlichen Meßvorgang erfaßt werden müssen. Eine solche bekannte Vorrichtung weist den Nachteil auf, daß jede nachträgliche Veränderung der Orientierungs- oder Systemparameter das Ergebnis verfälschen.

Neben optischen 3D-Meßverfahren auf der Basis von Streifenprojektionstechniken sind photogrammetrische 3D-Meßverfahren bekannt, wobei Grundlage für die Berechnung von 3D-Koordinaten der Meßpunkte die Bildkoordinaten, d.h. zweidimensionale Abstände der Bildpunkte vom Meßobjekt von einem willkürlich festgelegten Koordinatenursprung eines zweidimensionalen Koordinatensystems in der Bildebene des Empfängers ist. Diese Bildkoordinaten müssen für eine Koordinatenberechnung aus mindestens zwei unterschiedlichen Kamerapositionen gemessen werden. Vorteilhaft bei diesen Meßverfahren ist, daß pro Meßpunkt ein überzähliger Meßwert gewonnen werden kann, wobei auf diese Weise bei hinreichend vielen Meßpunkten simultan Koordinaten, innere und äußere Orientierungsparameter der Kamera sowie Korrekturparameter für die Verzeichnung berechnet werden. Erhebliche Schwierigkeiten bei der Verwendung photogrammetrischer Meßverfahren bereitet jedoch die Tatsache, daß die Bildkoordinaten an homologen Meßpunkten bestimmt werden müssen. Voraussetzung dafür ist, daß für eine Punktauswahl die Meßobjektoberfläche geeignet texturiert ist oder daß Marken auf das Meßobjekt aufgebracht werden. Die Extraktion homologer Bildpunkte ist sehr zeitaufwendig und erfordert spezielle Auswertealgorithmen.

Nach einem Vorschlag in der DE 196 37 682 A1 können die Probleme bei der aufwendigen Kalibrierung umgangen werden, wenn das zu vermessende Objekt aufeinanderfolgend aus mindestens zwei vorbestimmten Richtungen mit jeweils zwei Lichtmustern oder Gitterlinienbildern beleuchtet wird, bei denen die Gitterlinienrichtungen um einen Winkel zueinander verdreht sind. In diesem Fall können Koordinaten, unbekannte Orientierungsparameter und Korrekturparameter für die Verzeichnung simultan bestimmt werden, wenn die Anzahl der Meßpunkte eine vorbestimmte Anzahl übersteigt. Ein Markieren der Meßpunkte ist nicht erforderlich. Das Meßergebnis liefert unskalierte Koordinatenmeßwerte in einem freien Koordinatensystem, die Orientierungsparameter des Projektors und ggf. auch der Kamera sowie Parameter zur Korrektur von Projektor und Kamera.

Der Erfindung liegt die Aufgabe zugrunde, eine Vorrichtung zum Bestimmen der räumlichen Koordinaten von Gegenständen entsprechend dem Stand der Technik zu schaffen, die einfach in ihrem Aufbau und leicht handhabbar ist und mit der es möglich ist, Koordinaten und System- bzw. Orientierungsparameter simultan zu bestimmen sowie Teilansichten ohne die Markierung von Verknüpfungspunkten bzw. ohne Hilfe von Matchingprozeduren klaffungsfrei zusammenzufügen.

Diese Aufgabe wird erfindungsgemäß durch die kennzeichnenden Merkmale des Hauptanspruchs gelöst.

Durch die in den Unteransprüchen angegebenen Maßnahmen sind vorteilhafte Weiterbildungen und Verbesserungen möglich.

Im Unterschied zum Ausführungsbeispiel in DE 196 37 682 A1 ist in der vorgeschlagenen Vorrichtung der Projektor stationär aufgebaut. Jeder einzelne Projektor ist lediglich in der Höhe über dem Meßobjekt und in seiner Neigung zum Meßobjekt verstellbar. Gegebenenfalls können weitere Projektoren in unterschiedlichen Orientierungen zum Meßobjekt am gleichen Gestänge befestigt oder auch weitere stationäre Projektorhalterungen aufgebaut werden. Dadurch entfällt in der Zeit der Meßwertaufnahme eine zwischenzeitlich notwendige Projektorbewegung wie in DE 196 37 682 A1. Dieser Sachverhalt vereinfacht den technischen Aufwand für den Aufbau der Meßanordnung und macht das Gesamtsystem leichter handhabbar.

Durch die Befestigung der als CCD-Kameras an einem Rahmen ausgebildeten Empfänger wird erreicht, daß die Kameras in allen Drehtischpositionen exakt den gleichen Bildausschnitt auf die Empfängerfläche abbilden. Das wird unbedingt verlangt, da anderenfalls die Phasenmessung nicht an homologen Meßpunkten erfolgt, so daß eine zuverlässige Koordinatenberechnung nicht mehr möglich ist. Die gemessenen Koordinaten an den Meßpunkten aller Kameras liegen in jedem Falle im gleichen Koordinatensystem, wenn bei der Tischdrehung immer solche Drehwinkel gewählt werden, daß in der Summe aller Kamerabilder eine von Null verschiedene Schnittmenge in den ausgeleuchteten Flächen benachbarter Projektorpositionen gesichert wird. In der Schnittmenge sollten mindestens drei Meßpunkte liegen. Bei einer beliebigen Projektorbewegung - wie in DE 196 37 682 A1 vorgeschlagen - ist die genannte Bedingung nicht zwangsläufig erfüllt.

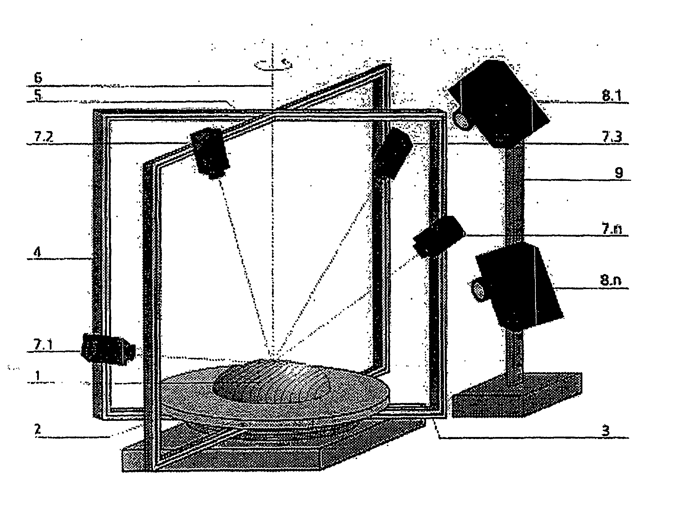

Ein Ausführungsbeispiel der Erfindung ist in der Zeichnung dargestellt und wird in der nachfolgenden Beschreibung näher erläutert. Die einzige Figur zeigt eine schematische perspektivische Ansicht der erfindungsgemäßen Vorrichtung.

Entsprechend der Figur ist das zu vermessende Objekt bzw. der zu vermessende Gegenstand 1 auf einem Drehtisch 2 angeordnet, an dem ein Gestänge oder Rahmen 4 befestigt ist. Der Rahmen 4 weist senkrechte Säulen 3 auf, die über Querstreben 5 miteinander verbunden sind, wodurch der gesamte Aufbau stabilisiert wird. Der Rahmen 4 ist gemeinsam mit dem Drehtisch 2 um die Drehtischachse 6 drehbar. An den Rahmensäulen 3, aber ggf. auch an den Querstreben 5 sind Halterungen angebracht, an denen CCD-Kameras 7.1 bis 7.n befestigt sind, wobei im dargestellten Ausführungsbeispiel vier Kameras verwendet werden. In der Regel werden so viele Kameras 7.1 bis 7.n in beliebigen unterschiedlichen Positionen zum Meßobjekt eingesetzt, wie für die vollständige Erfassung der Meßfläche durch die unterschiedlichen Teilbilder erforderlich sind.

Seitlich vom Drehtisch 2 mit dem starr mit ihm verbundenen Rahmen 4 sind an einem Gestänge 9 mehrere, im Ausführungsbeispiel 2 Projektoren 8.1 bis 8.n angebracht, wobei jedoch auch nur ein Projektor vorgesehen sein kann. Er wird so aufgestellt, daß das Meßobjekt 1 und in vorteilhafter Weise auch Teile der Umgebung des Meßobjekts ausgeleuchtet werden. Seine Höhe über dem Meßobjekt 2, die Neigung seiner optischen Achse zum Meßobjekt kann der Meßaufgabe angepaßt werden. Weiterhin kann der bzw. können die Projektoren 8.1 bis 8.n als Einheit um eine zu optischen Achse des Projektors parallelen Achse drehbar sein wobei nach einer zusätzlichen Drehung des Projektors wiederum aufeinanderfolgend jeweils zwei Serien von Gray-Code-Sequenzen und phasenverschobene Gitterlinien mit zwischenzeitlicher Gitterdrehung um 90° projiziert werden.

Hinsichtlich der Anordnung des Meßobjektes 1 auf dem Drehtisch 2 können auch solche verwendet werden, in denen das Meßobjekt 1 auf einem zusätzlichen Podest liegt, so daß von entsprechend am Rahmen 4 angebrachten Kameras 7 auch die Unterseite bzw. Teile der Unterseite des Meßobjekts 1 erfaßt werden können.

Als Projektoren 8 können unterschiedliche Systeme verwendet werden. Eine erste Art von Projektoren weist auf Glasträger aufgebrachte Gray-Code-Sequenzen sowie vorzugsweise vier oder fünf Liniengitter auf, die um jeweils 90° in der Phase zueinander verschoben sind. Bei einer solchen Gitteranordnung sind die Glasträger bzw. die Projektoren um eine Achse parallel zur Gitternormalen mit einem Winkel zwischen 10° und 90° drehbar.

In einem weiteren Ausführungsbeispiel ist der Projektor aus matrixförmig angeordneten Einzelelementen aufgebaut, wobei die Einzelelemente beispielsweise als LCD-Chips ausgebildet sind. Dabei werden einzelne rechteckförmige Bereiche bzw. Pixel von einer Steuerspannung so angesteuert, daß eine Gray-Code-Sequenz und nachfolgend vier oder fünf um jeweils 90° in der Phase zueinander verschobene Liniengitter und daraufhin um 90° verdreht eine zweite Gray-Code-Sequenz und nachfolgend vier oder fünf Liniengitter mit einer Phasenverschiebung von 90° zueinander erzeugt werden. In diesem Fall liegen die Kanten des Gray-Codes und die Gitterlinien einmal parallel und einmal senkrecht zu den Spalten der LCD-Matrix oder umgekehrt.

In einem weiteren Ausführungsbeispiel sind die matrixförmig angeordneten Einzelelemente in einer DMD Technologie ausgeführt, wobei die Einzelelemente kleine bewegliche Spiegelflächen auf einem Chip sind. Bei der Ansteuerung eines Spiegelelementes wird dieser ausgelenkt und das von einer auf die Mikrospiegelmatrix gerichtete Lichtquelle ausgesandte auftreffende Licht wird nicht in die für die Abbildung erforderliche Strahlrichtung zurückgeworfen. Die Ansteuerung der Spiegelelemente erfolgt wiederum so, daß jeweils aufeinanderfolgend zwei Gray-Code-Sequenzen und nachfolgend vier oder fünf um jeweils 90° in der Phase zueinander verschobene Liniengitter um 90° gegeneinander verdreht erzeugt werden. Darüber hinaus werden die Einzelspiegel so angesteuert, daß die Intensitätsverteilung im Bild des Liniengitters cos²-förmig ist.

In einem weiteren Ausführungsbeispiel eines "digitalen Projektors" mit matrixförmig angeordneten Einzelelementen sind diese auf der Grundlage von D-ILA-Technologien (Direct Image Light Amplifier) ausgebildet, wobei die Einzelelemente wiederum pixelweise angesteuert werden. Wird ein Element aktiviert, so wird in Abhängigkeit vom Wert der angelegten Spannung durch Energieübertragung auf Flüssigkristalle das Reflexionsverhalten dieses Elementes verändert. Ansonsten wird die Ansteuerung der Einzelelemente, wie oben erwähnt, durchgeführt und die Intensitätsverteilung im Gitterlinienbild ist in guter Näherung, wie oben erwähnt, durch eine cos²-Verteilung gegeben.

Der Meßvorgang mit der Vorrichtung nach der Figur läuft in folgender Art und Weise ab. In einer ersten Einstellung des Drehtisches 2 wird, wie oben beschrieben, eine Serie von Graycode-Sequenzen und phasenverschobenen Gitterlinien aufeinanderfolgend um 90° zueinander verdreht auf die Meßfläche projiziert. Jede Kamera 7 registriert in den für sie sichtbaren Punkten die Intensitätswerte der jeweils projizierten Strukturen und es werden die Phasendifferenzen in den jeweils zwei Phasenbildern für jede Beleuchtungsrichtung in Bezug auf immer einen gleichen Referenzwert gebildet. Der Referenzwert markiert den Nullpunkt des Bildkoordinatensystems für jede Projektorposition bzw. Drehtischposition. Der Referenzpunkt bzw. der Nullpunkt des Bildkoordinatensystems wird vorteilhafterweise in den Durchstoßungspunkt der optischen Achse des Projektors durch die Gitterebene gelegt. Aus den Phasendifferenzen bzw. den Intensitätsmeßwerten werden unter Verwendung bekannter Algorithmen für die Projektorposition die beiden Bildkoordinaten jedes Meßpunktes berechnet, wie sie aus der Photogrammetrie bekannt sind. Die Meßpunkte, an denen gemessen wird, sind die virtuellen Bildpunkte der Empfängerelemente aller Kameras auf der Meßfläche. Ggf. wird in der gleichen Drehtischposition der Projektor um eine zu seiner optischen Achse parallelen Achse gedreht und die Projektion der Intensitätsstrukturen wiederholt.

Die zusätzliche Drehung - in der Photogrammetrie nach zusätzlicher Drehung der Kamera auch Kantung genannt - ist von Vorteil und ggf. auch zwingend erforderlich, wenn simultan zu den Koordinaten und den Orientierungsparametern auch die Korrekturparameter für die Abbildungsfehler (Verzeichnung) der Projektoroptik bestimmt werden.

Nach Abschluß der Meßwertaufnahme in der ersten Drehtischposition wird der Tisch 2 mit dem Gegenstand 1, dem Rahmen 4 und den Kameras 7.1 bis 7.n um seine Drehachse 6 verdreht. Der Drehwinkel kann beliebig gewählt werden, er sollte aber größer als 5° sein. Die Änderung der Drehtischposition entspricht systematisch einer Änderung der Projektorposition. In dieser zweiten Drehtischposition werden Meßwerte, wie oben für die erste Drehtischposition beschrieben wurde, aufgenommen. Dabei muß sich der Projektor 8 in dieser zweiten Drehtischposition nicht notwendigerweise in der gleichen Höhe über dem Objekt befinden und mit gleicher Achsneigung das Objekt 2 beleuchten. Die Veränderung der Drehtischposition oder auch der Projektorposition erfolgt dabei so, daß es in den ausgeleuchteten Meßfeldern für die aufeinanderfolgenden Drehtischpositionen eine gemeinsame Schnittmenge gibt, in der mindestens drei Meßpunkte aus allen Kameraansichten liegen.

Die Aufnahmeprozedur wird anschließend für eine dritte oder auch für weitere Drehtischpositionen wiederholt. Günstig sind 4 bis 21 Drehtischpositionen.

Aus den in jeder Kameraposition gemessenen Bildkoordinaten werden in einem beliebig vorgewählten Raster oder interaktiv an beliebig über das Meßwertfeld verteilten Punkten oder an Punkten unter Berücksichtigung von vorgegebenen Auswahlkriterien für alle Projektionsrichtungen bzw. Drehtischpositionen, die gültige Meßwerte liefern, Bildkoordinaten aus der Gesamtmenge aller Bildkoordinaten Meßwerte extrahiert. Mögliche Auswahlkriterien sind z.B. vorgegebene Schranken für die Sichtbarkeit, die Modulation der Intensitätsmeßwerte für die Phasenberechnung an jedem Empfängerelement oder die Mindestanzahl der Beleuchtungsrichtungen, die am Meßpunkt einen gültigen Meßwert liefern.

Insgesamt sollten Meßwerte an mindestens 100 Meßpunkten ausgewählt werden, wobei die Maximalzahl nach oben prinzipiell nicht begrenzt ist. Anzustreben ist eine gleichmäßige Verteilung dieser Punkte über die Meßfläche und die Einbeziehung von Meßpunkten in der Umgebung des eigentlichen Meßobjektes in den nachfolgenden Bündelausgleich.

An den ausgewählten Meßpunkten werden mit allen dort gemessenen Bildkoordinaten unter Verwendung bekannter Bündelausgleichsalgorithmen simultan die Koordinaten der Meßpunkte, die äußeren Orientierungsparameter für alle Projektor- bzw. Drehtischpositionen, die inneren Orientierungsparameters des Projektors einschließlich von Korrekturparametern für Abbildungsfehler der Projektionsoptik berechnet. Mit den dann bekannten Orientierungs- und Korrekturparametern werden schließlich an allen verbleibenden Meßpunkten mit mindestens drei gültigen Bildkoordinatenmeßwerten die Koordinaten berechnet. Teilansichten von den verschiedenen Kameras werden so miteinander verknüpft, daß die Koordinatenmeßwerte im gleichen Koordinatensystem liegen.

Im Ergebnis der Auswertung liegen für die Meßpunkte unskalierte Koordinatenmeßwerte in einem freien Koordinatensystem vor. Um eine richtige Skalierung der Koordinatenmeßwerte sicherzustellen, wird entweder mit dem zu vermessenden Objekt gleichzeitig mindestens ein Körper vermessen, von dem ein Längenmaß bekannt ist (z.B. eine Kugel mit bekanntem Radius), oder die berechneten Koordinatenwerte werden über ein bekanntes Stichmaß im Meßobjekt nachträglich skaliert.

Die beschriebene Meßanordnung kann in jeder Projektor- bzw. Drehtischposition durch ihre 6 äußeren Orientierungsparameter (drei Koordinaten der Projektionszentren, drei Drehwinkel um die mitgedrehten Koordinatenachsen), ihre drei inneren Orientierungsparameter und durch zusätzliche Parameter zur Korrektur der Abbildungsfehler beschrieben werden. Dabei sind die äußeren Orientierungsparameter in jeder Projektorposition für alle Meßpunkte gleich. Die inneren Orientierungsparameter einschließlich der Korrekturparameter sind darüber hinaus unabhängig von der Projektorposition, wenn davon ausgegangen werden kann, daß für alle Projektionen der gleiche Projektor verwendet wird und sich die inneren Orientierungsparameter dieses Projektors in einem Meßvorgang nicht verändern. Wird das Meßobjekt aus mindestens zwei verschiedenen Projektorpositionen bzw. Drehtischpositionen beleuchtet, stehen für die Berechnung der Koordinaten eines Meßpunktes mehr als die notwendigen drei Meßwerte zur Verfügung. Sind n die Anzahl der Meßpunkte, j die Anzahl der Projektorpositionen und k die Anzahl der Korrekturparameter für Abbildungsfehler, dann können Koordinaten und Orientierungs- sowie Korrekturparameter simultan berechnet werden, wenn gilt: n·j≥3·n+6·j+k+3.

Es können zusätzlich oder als Alternative die inneren und äußeren Orientierungsparameter sowie die Korrekturparameter für die Verzeichnung der Abbildungsoptiken der Kameras zur flächenhaften Erfassung der Intensitätsmeßwerte bestimmt werden.

## Patentansprüche

1. Vorrichtung zur Bestimmung der räumlichen Koordinaten eines Gegenstands, mit einer Projektionsvorrichtung zur Bestrahlung des Gegenstands aus mindestens zwei vorbestimmten Richtungen jeweils mit mindestens zwei Lichtmustern oder mit einem Lichtmuster, dessen Helligkeitsverlauf der Summe der Helligkeitsverläufe zweier gekreuzter Liniengitter entspricht, mit einer Sensorvorrichtung zur flächenhaften Erfassung und Aufzeichnung von Intensitätsmeßwerten von der mit dem jeweiligen Lichtmustern bestrahlten Objektoberfläche und mit einer Auswertevorrichtung, die daraus für jeden der aufgezeichneten Meßpunkte mindestens vier Phasenmeßwerte und aus diesen mindestens alle räumlichen Koordinaten der Punkte bestimmt, **dadurch gekennzeichnet,**
**daß** die Vorrichtung einen Drehtisch (2) enthält, auf dem der zu vermessende Gegenstand (1) angeordnet ist, wobei die Drehtisch (2) eine Stützanordnung (4) mit Tragelementen (3, 5) trägt, die in unterschiedlichen Radialrichtungen zum Drehtisch (2) angeordnet und mit dem Drehtisch (2) um dessen Drehachse (6) drehbar sind, wobei an der Stützanordnung (4) an unterschiedlichen beliebigen Positionen zum Gegenstand (1) mindestens ein, jedoch so viele räumlich zweidimensional auflösende Empfänger (7) als Sensorvorrichtung angeordnet sind, wie sie für die Erfassung der zu messenden Bereiche des Gegenstandes (1) erforderlich sind, und daß die Projektionsvorrichtung (8) neben dem Drehtisch angeordnet ist.

2. Vorrichtung nach Anspruch 1, **dadurch gekennzeichnet, daß** die Auswertevorrichtung zusätzlich zu den Koordinaten der Meßpunkte die inneren und äußeren Orientierungsparameter für alle Projektorpositionen bzw. Projektoren sowie die Korrekturparameter für die Verzeichnung der Projektionsoptiken bestimmt.

3. Vorrichtung nach Anspruch 1 oder 2, **dadurch gekennzeichnet, daß** die Auswertevorrichtung Teilansichten von verschiedenen Empfängern so miteinander verknüpft, daß alle Koordinatenmeßwerte im gleichen Koordinatensystem liegen.

4. Vorrichtung nach einem der Ansprüche 1 bis 3, **dadurch gekennzeichnet, daß** die Projektorvorrichtung (8) hinsichtlich ihrer Höhe über dem Gegenstand (1) und der Neigung ihrer optischen Achse zum Gegenstand (1) bei unterschiedlichen Drehwinkeln des Drehtisches (2) unterschiedlich einstellbar ist.

5. Vorrichtung nach einem der Ansprüche 1 bis 4 oder Anspruch 2, **dadurch gekennzeichnet, daß** die Projektorvorrichtung (8) um eine zu ihrer optischen Achse parallelen Achse drehbar ist.

6. Vorrichtung nach einem der Ansprüche 1 bis 5, **dadurch gekennzeichnet, daß** zur Erfassung der Unterseite oder von Teilen der Unterseite des Gegenstandes (1) der Drehtisch (2) ein Podest zur Aufnahme des Gegenstandes aufweist.

7. Vorrichtung nach einem der Ansprüche 1 bis 6, **dadurch gekennzeichnet, daß** die Projektorvorrichtung (8) Gray-Code-Sequenzen und drei, vorzugsweise vier bis fünf um jeweils 90° in der Phase zueinander verschobene Liniengitter erzeugt, die um einen Winkel zwischen 0° und 90° um eine Achse parallel zur Gitternormalen drehbar sind.

8. Vorrichtung nach Anspruch 7, **dadurch gekennzeichnet, daß** die Gray-Code-Sequenzen und Liniengitter auf Glasträger aufgebracht sind.

9. Vorrichtung nach Anspruch 7, **dadurch gekennzeichnet, daß** die Projektorvorrichtung matrixförmig angeordnete Einzelelemente aufweist, die entsprechend den zu erzeugenden Gray-Code-Sequenzen und Gitter einzeln ansteuerbar sind.

10. Vorrichtung nach Anspruch 9, **dadurch gekennzeichnet, daß** die Einzelelemente durch Anlegen einer Steuerspannung selektiv in ihren Transmissions -und/oder Reflexionseigenschaften veränderbar sind.

11. Vorrichtung nach Anspruch 9 oder 10, **dadurch gekennzeichnet, daß** die Einzelelemente als von einer Lichtquelle angestrahlte bewegliche Spiegelelemente ausgebildet sind, die bei Ansteuerung in ihrer Abstrahlrichtung veränderbar sind.

12. Vorrichtung nach einem der Ansprüche 1 bis 11, **dadurch gekennzeichnet, daß** auf dem Drehtisch (2) zusammen mit dem zu vermessenden Gegenstand eine Strecke mit bekannter Länge angeordnet ist, und daß die Auswerteeinrichtung die Koordinatenmeßwerte unter Verwendung der bekannten Länge skaliert.

13. Vorrichtung nach einem der Ansprüche 1 bis 11, **dadurch gekennzeichnet, daß** die Auswerteeinrichtung unter Verwendung eines bekannten Stichmaßes im zu vermessenden Gegenstand die berechneten Koordinatenmeßwerte nachträglich skaliert.

14. Vorrichtung nach Anspruch 12, **dadurch gekennzeichnet, daß** eine Kugel mit bekanntem Durchmesser oder auch mehrere Kugeln mit bekanntem Durchmesser oder bekannten Abständen ihrer Kugelmittelpunkte zusammen mit dem Gegenstand vermessen wird.

15. Vorrichtung nach einem der Ansprüche 1 bis 14, **dadurch gekennzeichnet, daß** die Auswertevorrichtung zusätzlich zu den Koordinaten der Meßpunkte die inneren und äußeren Orientierungsparameter sowie die Korrekturparameter für die Verzeichnung der Abbildungsoptiken der mindestens einen Sensorvorrichtung zur flächenhaften Erfassung der Intensitätsmeßwerte bestimmt.

## Claims

1. Apparatus for the determination of the spatial co-ordinates of an object, with a projection means for the irradiation of the object from at least two pre-determined directions, each with at least two light patterns or with a light pattern whose brightness development equals the sum of the brightness development of two crossing line grids, with a sensor means for the area recording and storing of intensity measurement values for the relevant object surface being irradiated with the light pattern, and with an evaluation means, whereby the same calculates at least four phase measurement values for each one of the recorded measurement points from the same, and from this at least all spatial co-ordinates of the points, **characterised in that** the apparatus incorporates a rotating table (2) on which the object (1) to be measured is positioned, whereby the rotating table (2) provides a supporting arrangement (4) with supporting elements (3, 5) that are positioned in different radial directions to the rotating table (2), and that can be rotated together with the rotating table (2) around its axis of rotation (6), whereby at least one, but as many spatially two-dimensionally resolving receivers (7) as there are sensor means are present in different desired positions in relation to the object (1) upon the supporting arrangement (4) as necessary for the recording of the areas of the object (1) that are to be measured, and **in that** the projector means (8) is positioned adjacent to the rotating table.

2. Apparatus according to Claim 1, **characterised in that** the evaluation means determines the internal and external orientation parameters for all projector positions, i.e. projectors in addition to the co-ordinates of the measuring points as well as the correction parameters for the storage of the projection optics.

3. Apparatus according to Claim 1 or 2, **characterised in that** the evaluation means connects partial views of different receivers in such a way with one another that all co-ordinate measurement values are located within the same co-ordination system.

4. Apparatus according to one of the preceding Claims 1 to 3, **characterised in that** the projector means (8) is variously adjustable with regard to its height above the object (1), and with regard to the angle of inclination of its optical axis in relation to the object (1) at different rotation angles of the rotating table (2).

5. Apparatus according to one of the preceding Claims 1 to 4 or Claim 2, **characterised in that** the projector means (8) can be rotated around an axis that extends parallel to its optical axis.

6. Apparatus according to one of the preceding Claims 1 to 5, **characterised in that** the rotating table (2) incorporates a pedestal for the receiving of an object for the recording of the underside or of parts of the underside of the object (1).

7. Apparatus according to one of the preceding Claims 1 to 6, **characterised in that** the projector means (8) creates grey code sequences and three preferably four- to five-line grids each offset from the other by 90° within the phase, whereby the same can be rotated around an axis that extends parallel to the grid normal at an angle of between 0° and 90°.

8. Apparatus according to Claim 7, **characterised in that** the grey code sequences and line grids are affixed onto a glass substrate.

9. Apparatus according to Claim 7, **characterised in that** the projector means incorporates matrix-shaped individual elements, whereby the same can be individually controlled according to the grey code sequences and grids that are to be produced.

10. Apparatus according to Claim 9, **characterised in that** the transmission and/or reflection characteristics of the individual elements can be changed through the selective applying of a control voltage.

11. Apparatus according to Claim 9 or 10, **characterised in that** the individual elements are formed as moveable mirror elements irradiated by a light source, whereby the ray reflection direction of the same can be controlled and changed.

12. Apparatus according to one of the preceding Claims 1 to 11, **characterised in that** a path of a known length is located upon the rotating table (2) together with the object that is to measured, and **in that** the evaluation means scales the co-ordinate measurement values with the aid of this known length.

13. Apparatus according to one of the preceding Claims 1 to 11. **characterised in that** the evaluation means subsequently scales the co-ordinate measurement values for the object that is to be measured with the aid of a known norm measurement.

14. Apparatus according to Claim 12, **characterised in that** a sphere with a known diameter, or several spheres with known diameters or known distances between their sphere centre points are measured together with the object.

15. Apparatus according to one of the preceding Claims 1 to 14, **characterised in that** the evaluation means determines the internal and external orientation parameters as well as the correction parameters for the storage of the image optics of the at least one sensor means for the area recording of the intensity measurement values in addition to the co-ordinates of the measurement points.

## Revendications

1. Dispositif pour déterminer les coordonnées spatiales d'un objet, comportant un dispositif de projection à des fins d'exposition de l'objet depuis au moins deux directions prédéfinies respectivement avec au moins deux modèles lumineux ou avec un modèle lumineux dont le tracé de luminosité correspond à la somme des tracés de luminosité de deux réseaux linéaires croisés, comportant un dispositif de détection à des fins de détection de surface et d'enregistrement des valeurs de mesure d'intensité des surfaces de l'objet exposées avec le modèle lumineux respectif et comportant un dispositif d'évaluation qui détermine pour chacun des points de mesure enregistrés au moins quatre valeurs de mesure de phase et, à partir de celles-ci, au moins toutes les coordonnées spatiales des points, **caractérisé en ce que** le dispositif contient une platine rotative (2) sur laquelle est disposé l'objet (1) à mesurer, la platine rotative (2) soutenant un système de support (4) comportant des éléments porteurs (3, 5) qui sont disposés dans différentes directions radiales par rapport à la platine rotative (2) et sont pivotants avec la platine rotative (2) autour de l'axe de rotation (6) de celle-ci, moyennant quoi, sur le système de support (4) à différentes positions quelconques par rapport à l'objet (1), au moins un, voire autant de récepteurs (7) à résolution bidimensionnels dans l'espace qu'il est nécessaire pour la détection des zones à mesurer de l'objet (1), sont placés en tant que dispositifs de détection, et **en ce que** le dispositif de projection (8) est placé à proximité de la platine rotative.

2. Dispositif selon la revendication 1, **caractérisé en ce que** le dispositif d'évaluation définit, outre les coordonnées des points de mesure, les paramètres d'orientation internes et externes pour toutes les positions du projecteur et/ou tous les projecteurs, ainsi que les paramètres de correction pour la distorsion des optiques à projection.

3. Dispositif selon la revendication 1 ou 2, **caractérisé en ce que** le dispositif d'évaluation relie des vues partielles des différents récepteurs, de sorte que toutes les valeurs de mesure des coordonnées se situent dans le même système de coordonnées.

4. Dispositif selon une des revendications 1 à 3, **caractérisé en ce que** le dispositif de projecteur (8) est réglable de façon variable au niveau de sa hauteur au-dessus de l'objet (1) et de l'inclinaison de son axe optique par rapport à l'objet (1) selon différents angles de rotation de la platine rotative (2).

5. Dispositif selon une des revendications 1 à 4 ou la revendication 2, **caractérisé en ce que** le dispositif du projecteur (8) est pivotant autour d'un axe parallèle à son axe optique.

6. Dispositif selon une des revendications 1 à 5, **caractérisé en ce que**, à des fins de détection de la face inférieure ou de parties de la face inférieure de l'objet (1), la platine rotative (2) comporte un palier destiné au logement de l'objet.

7. Dispositif selon une des revendications 1 à 6, **caractérisé en ce que** le dispositif de projecteur (8) produit des séquences de codes de Gray et trois, de préférence quatre à cinq, réseaux linéaires décalés respectivement les uns par rapport aux autres dans la phase de 90°, lesquels sont pivotants selon un angle compris entre 0° et 90° autour d'un axe parallèle à la normale de réseau.

8. Dispositif selon la revendication 7, **caractérisé en ce que** les séquences de codes de Gray et les réseaux linéaires sont appliqués sur le support en verre.

9. Dispositif selon la revendication 7, **caractérisé en ce que** le dispositif de projecteur comprend des éléments individuels disposés en forme de matrice, qui peuvent être activés individuellement selon les séquences de codes de Gray et les réseaux devant être produits.

10. Dispositif selon la revendication 9, **caractérisé en ce que** les éléments individuels peuvent être modifiés par l'application d'une tension de commande de façon sélective au niveau de leurs propriétés de transmission et/ou de réflexion.

11. Dispositif selon la revendication 9 ou 10, **caractérisé en ce que** les éléments individuels sont configurés comme des éléments de miroir mobiles éclairés par une source lumineuse qui peuvent être modifiés lors de l'activation au niveau de leur sens de rayonnement.

12. Dispositif selon une des revendications 1 à 11, **caractérisé en ce qu'**une ligne de longueur connue est placée sur la platine rotative (2) conjointement avec l'objet à mesurer, et **en ce que** le dispositif d'évaluation cadre les valeurs de mesure des coordonnées à l'aide de la longueur connue.

13. Dispositif selon une des revendications 1 à 11, **caractérisé en ce que** le dispositif d'évaluation cadre en sus, à l'aide d'un calibre connu dans l'objet à mesurer, les valeurs de mesure des coordonnées calculées.

14. Dispositif selon la revendication 12, **caractérisé en ce qu'**une sphère ayant un diamètre connu, voire plusieurs sphères ayant un diamètre connu ou des distances connues par rapport aux centres des sphères, est mesuré conjointement avec l'objet.

15. Dispositif selon une des revendications 1 à 14, **caractérisé en ce que** le dispositif d'évaluation définit, outre les coordonnées des points de mesure, les paramètres d'orientation internes et externes, ainsi que les paramètres de correction pour la distorsion des optiques d'image du au moins un dispositif de détection pour la détection de surface des valeurs de mesure d'intensité.
